# EUROPÄISCHE PATENTANMELDUNG

(11) **EP 1 300 792 A2**
(43) Veröffentlichungstag der Anmeldung: **09.04.2003**
(21) Anmeldenummer: 02100725.7
(22) Anmeldetag: 20.06.2002
(51) Int. Cl.: G06F 17/60, G06F 1/00

(54) **Computergestützten Verfahren und Anordnung zur Überwachung einer Nutzung von Lizenzen**

(30) Priorität: 20.07.2001 DE 10135512
(71) Anmelder: SIEMENS AKTIENGESELLSCHAFT, 80333 München (DE)
(72) Erfinder: Behr, Werner, 33102, Paderborn (DE); Bozionek, Bruno, 33178, Borchen (DE); Brese, Ralf, 33397, Rietberg (DE); Minderlein, Achim, 33175, Bad Lippspringe (DE); Zimmermann, Rainer, 33106, Paderborn (DE)

(57) **Zusammenfassung**

Computergestütztes Verfahren zur Überwachung einer Nutzung von Lizenzen in einem Rechner- und/oder Kommunikationssystem mit einer Mehrzahl von Endgeräten, in dem mindestens eine Lizenz mindestens einem Benutzer zugeordnet ist, wobei die Nutzung der Lizenz oder Lizenzen durch den oder jeden Benutzer während eines definierten Zeitraumes nach Laufzeitbeginn der Lizenz erfaßt wird, wobei in Abhängigkeit von dem Erfassungsergebnis mindestens dann eine in Abhängigkeit von dem Erfassungsergebnis generierte Nachricht an das Endgerät des Benutzers gesendet wird, falls der Nutzungsumfang einen vorbestimmbaren Wert unterschreitet.

## Beschreibung

Die Erfindung betrifft ein Verfahren zur Überwachung einer Nutzung von Lizenzen nach dem Oberbegriff von Anspruch 1, eine Anordnung zur Verwaltung von Lizenzen, sowie eine Auswertungs- und Steuereinrichtung zur Durchführung dieses Verfahrens.

Programme für elektronische Datenverarbeitungsanlagen bzw. Computersysteme werden üblicherweise nach der Anzahl der Benutzer der Programme lizenziert. Es sind für ein Computersystem so viele Lizenzen eines Programms erforderlich, wie es Benutzer des Programms gibt. Man spricht hier von einer benutzerbezogenen Lizenzierung. Es liegt auf der Hand, dass eine solche Lizenz sehr kostenintensiv sein kann. Allerdings bleiben häufig eine oder mehrere der kostenverursachenden Lizenzen ungenutzt, da nicht immer alle Benutzer, die mit dem Programm arbeiten wollten oder sollten und die daher beim Erwerb der Programmlizenz berücksichtigt wurden, tatsächlich mit dem Programm arbeiten.

Eine Lösung für die bessere Ausnutzung von Programmlizenzen besteht in der Einrichtung sogenannter Lizenzpools. Diese bieten sich vor allem in größeren Computersystemen, insbesondere in großen Computernetzwerken, zur Limitierung der Anzahl der erforderlichen Programmlizenzen und damit zur Kostensenkung an. Ein Lizenzpool verwaltet alle zur Verfügung stehenden Lizenzen derart, dass beispielsweise beim Aufrufen eines Programms durch einen Benutzer ein Administrator nach einer freien Lizenz im Pool gefragt wird. Ist eine freie Lizenz vorhanden, wird diese dem nachfragenden Benutzer zugeteilt und für die weitere Nutzung durch Dritte gesperrt. Allerdings sind derartige Lizenz-Pools, insbesondere die Programme zur Verwaltung der Pools, in bezug auf die erforderlichen Computerressourcen und den Pflegeaufwand sehr aufwendig. Sie eignen sich daher in der Regel nur für sehr teure Programmlizenzen, deren Einsatz bzw. Nutzung optimal ausgeschöpft werden muss, und/oder in großen Computernetzwerken in größeren Unternehmen, in denen ausreichend Computerressourcen zur Verfügung stehen. In kleineren Computersystemen, beispielsweise im Small-Office-Home-Office-Bereich (SOHO-Bereich), und für einfachere Programme, wie beispielsweise Office-Pakete, kleinere Datenbanken, Grafikprogramme oder dergleichen, ist hier der Aufwand in der Regel zu groß.

Eine einfachere Lösung besteht in der automatischen Erstellung von Lizenzstatistiken und deren periodischer Auswertung durch einen Systemadministrator. In einer derartigen Lizenzstatistik kann beispielsweise aufgeführt sein, welcher Benutzer wie häufig bzw. wie lange die ihm zugeteilten Lizenzen verschiedener Programme nutzt. Allerdings muss die Lizenzstatistik manuell ausgewertet werden, was einen relativ hohen Arbeitsaufwand erfordert. Anhand der Auswertung kann dann die Neuverteilung, Neuanschaffung und/oder Rückgabe von Programmlizenzen geplant werden. Auch der hiermit verbundene Arbeitsaufwand ist hoch, wodurch auch diese Lösung kostenintensiv und daher insbesondere für kleinere Unternehmen wenig geeignet ist.

Des weiteren sind die bekannten Lösungen nur für eine Verwaltung von Lizenzen in Computersystemen bekannt. Lösungen, die eine gleichzeitige Verwaltung von Lizenzen in Computer- und Kommunikationssystemen ermöglichen sind dagegen nicht bekannt.

Aufgabe der vorliegenden Erfindung ist es daher, ein Verfahren und eine Anordnung zum Überwachen der Nutzung von Lizenzen in Rechner- und Kommunikationssystemen und eine entsprechende Überwachungseinrichtung vorzuschlagen, welche die Ausnutzung vorhandener Lizenzen mit geringem Aufwand verbessern.

Diese Aufgabe wird durch ein Verfahren mit den Merkmalen nach Anspruch 1, eine Anordnung mit den Merkmalen nach Anspruch 14 und eine Auswertungs- und Steuereinrichtung mit den Merkmalen nach Anspruch 16 gelöst.

Bevorzugte Ausgestaltungen der Erfindung ergeben sich aus den abhängigen Ansprüchen.

Ein wesentlicher Gedanke der Erfindung besteht darin, dass die Nutzung einer Lizenz durch einen Benutzer, dem die Lizenz zugeordnet ist, automatisch überwacht und das Überwachungsergebnis dem Benutzer periodisch signalisiert wird. Bei einer Lizenz kann es sich beispielsweise um eine Lizenz für ein Softwareprogramm - im weiteren als Programm-Lizenz bezeichnet - , aber auch um eine Lizenz für eine Nutzung von Ressourcen eines Kommunikationssystems - im weiteren als Switch-Lizenz bezeichnet - handeln. Im Sinne der Erfindung wird unter Programm ein beliebiges EDV-Programm für ein Computersystem, beispielsweise ein Textverarbeitungsprogramm, eine Tabellenkalkulation, ein Datenbankprogramm, ein CAD-Programm verstanden. Dem gemäß ist eine Programm-Lizenz eine Lizenz des Programmherstellers zur Nutzung eines solchen Programms. Entsprechend ist eine Switch-Lizenz eine Lizenz eines Telekommunikations-Anbieters zur Nutzung einer Ressource eines Telekommunikationssystems, beispielsweise von Telefonanschlüssen oder Übertragungskapazitäten. Üblicherweise wird eine derartige Lizenz einem Unternehmen für eine Mehrzahl von Benutzern bzw. zur Implementierung in einer Mehrzahl von Arbeitsplätzen zugeordnet.

In einem Computersystem, mit dem eine Vielzahl von Benutzern arbeiten, sind in der Regel Benutzerkonten vorhanden, die auch häufig als Accounts bezeichnet werden. Wenn im folgenden von Benutzerkonten und diesen zugeordneten Lizenzen gesprochen wird, so ist damit gemeint, dass eine Lizenz organisatorisch einem Benutzer, insbesondere diesem Benutzerkonto, zugeordnet ist. Dies entspricht dem eingangs erwähnten benutzerbezogenen Lizenzmodell, das überwiegend bei weit verbreiteten Standard-Programmen (weniger bei Spezial-Software) angewandt wird.

Das erfindungsgemäße Verfahren erfaßt also ständig die tatsächliche Nutzung der den einzelnen Benutzerkonten zugeordneten Lizenzen im System. Im Ansprechen an die jeweiligen Erfassungsergebnisse sendet es selbsttätig Nachrichten an die Endgeräte der einzelnen Benutzer, falls diese die ihnen zugeordneten Lizenzen über einen bestimmten Zeitraum nicht genutzt haben oder ein bestimmter Nutzungsumfang unterschritten wird. Hierdurch entfällt eine manuelle Auswertung einer Lizenzstatistik, da ein Benutzer einer Lizenz über seine Nutzung des entsprechenden Programms bzw. der entsprechenden Switch-Ressource durch die Meldung an sein Endgerät automatisch informiert wird. Zudem ist das Verfahren in ein bestehendes System einfach und ohne großen Aufwand, also insbesondere kostengünstig implementierbar.

Der Überwachungszeitraum kann - in Abhängigkeit von den konkreten Lizenzbedingungen - auf Stunden, Tage, Wochen oder Monate, insbesondere etwa drei Monate, eingestellt werden. Sinnvolle Werte ergeben sich aus den Nutzungsgewohnheiten. Soll beispielsweise die Nutzung eines Programms bzw. einer Switch-Ressource überwacht werden, für das nur wenige Lizenzen vorhanden sind, das aber häufig genutzt wird, so bietet sich ein kürzerer Zeitraum als bei einem wenig benutzten Programm bzw. einer wenig genutzten Switch-Ressource an. Ein Zeitraum von drei Monaten hat sich hierbei für die meisten Programme bzw. Switch-Ressourcen als besonders geeignet erwiesen, um eine möglichst aufschlussreiche und aussagekräftige Nutzungsübersicht zu erhalten.

Zur differenzierten Ermittlung der Nutzung einer Lizenz wird beispielsweise die Anzahl der Aufrufe oder der Nutzungszeitraum des lizenzierten Programms bzw. der Switch-Ressource im Überwachungszeitraum bestimmt. Beide Methoden sind auch kombinierbar, so dass die Nutzung sowohl anhand der Ermittlung der Aufrufe des entsprechenden Programms bzw. der entsprechenden Switch-Ressource als auch der Messung der Nutzungszeiträume erfolgt. Dies ergibt eine sehr genaue Nutzungsbestimmung, während die Anwendung nur einer Methode ungenauer, dafür mit weniger Aufwand verbunden ist.

In einer bevorzugten Ausführung des Verfahrens wird die automatisch erzeugte Nachricht als elektronische Mitteilung (E-Mail) an den Benutzer gesendet. Im Falle einer E-Mail setzt dies natürlich einen E-Mail-Account des Benutzers, genauer gesagt seines Benutzerkontos voraus, der aber praktisch in jedem modernen Computersystem vorhanden ist, an dem mehrere Benutzer arbeiten. Vorteilhafterweise können bereits auf dem Computersystem vorhandene E-Mail-Systeme oder -Programme genutzt werden. Eine andere Möglichkeit ist beispielsweise die Darstellung der Meldung in einem Fenster am Bildschirm des Benutzers oder an einem Display eines Telekommunikationsendgeräts.

Nach Absenden der Nachricht kann ferner eine Zeitmessung gestartet werden. Bei Ablauf einer vorgebbaren Antwort-Zeitspanne wird dann eine nicht oder zu wenig genutzte Lizenz dem Benutzer entzogen und für andere Benutzer freigegeben. Mit der Antwort-Zeitspanne soll dem Benutzer eine Art Überlegungs- und Schonfrist eingeräumt werden. Nach Erhalt der Meldung über die Nutzung seiner Lizenz weiß ein Benutzer, dass er das Programm bzw. die Switch-Ressource über einen relevanten Zeitraum nicht oder - gemäß den firmeninternen Nutzungskritierien - zu wenig genutzt hat und deshalb mit dem internen Entzug der Nutzungsberechtigung und deren Zuweisung an einen anderen Benutzer rechnen muß. Er kann daraufhin prüfen, ob das lizenzierte Programm bzw. die lizenzierte Switch-Ressource für seine Arbeit in der nächsten Zeit benötigt wird, und eine entsprechende Nachricht (Bestehen auf der Nutzungsberechtigung oder Einverständnis mit deren Zuweisung an einen anderen Benutzer) an die Überwachungseinrichtung des Systems senden.

Durch eine Rückmeldung, insbesondere in Form einer E-Mail, vom Benutzerkonto kann die Zeitmessung gestoppt werden. Damit kann ein Benutzer zu erkennen geben, dass er über die "geringe" Nutzung der ihm zugeordneten Lizenz informiert ist, aber eine weitere Nutzung des Programms bzw. der Switch-Ressource wünscht - oder er kann die Nutzungsberechtigung sogleich freigeben.

Eine derartige Rückmeldung auf die automatisch an das Benutzer-Endgerät gesandte Nachricht wird vorzugsweise auch automatisch ausgewertet. Abhängig von dem Auswerteergebnis wird über ein Entziehen und anschließendes Freigeben der entsprechenden Lizenz entschieden. Dies ist insbesondere dann interessant, wenn mit der Rückmeldung verschiedene Reaktionen des Benutzers möglich sind, er sich also zur weiteren Nutzung einer Lizenz äußern kann. Eine automatische Signalauswertung kann beispielsweise aufgrund vorgegebener Codes erfolgen. Sie wird vor allem durch eine standardisierte Rückmeldung vereinfacht, welche die vorher an das Benutzerkonto gesandte Meldung mit vorgegebenen, auswählbaren Optionen sein kann.

Vorzugsweise wird nach einem Entzug und anschließender Freigabe einer internen Nutzungsberechtigung für die Lizenz automatisch eine Freigabe-Meldung an eine Administratoreinheit des Systems gesendet, so dass eine Information über wieder frei verfügbare Lizenzen zentral im System vorliegt. Sie kann von allen Benutzern, bei denen - beispielsweise im Zusammenhang mit der Übernahme eines neuen Projektes - Bedarf nach Nutzung eines bestimmten lizenzierten Programms bzw. einer Switch-Ressource entsteht, abgefragt werden.

Auf diese Weise ist ohne die Einschaltung einer hochqualifizierten (und hochbezahlter) Arbeitskraft eines Systemadministrators eine effiziente Handhabung kostspieliger Lizenzen möglich. Durch die Nutzung bereits vorhandener Ressourcen, wie eines E-Mail-Systems zur Benachrichtigung der Benutzer über deren Nutzung von Lizenzen, wird das Verfahren besonders einfach und kostengünstig.

In einer besonders vorteilhaften Ausführungsform wird nach Empfang der Freigabe-Meldung die freigegebene Lizenz automatisch an einen auf die Lizenz wartenden Benutzer vergeben. Im Zusammenhang mit dieser Variante ist auch eine Verfahrensführung sinnvoll, bei der im Ansprechen auf eine Anfrage eines interessierten Benutzers der oben als periodischer Vorgang beschriebene Erfassungs- und Benachrichtigungsvorgang gestartet wird. Bei dieser Variante wird bei Eingang einer Anfrage nach einem lizenzierten Programm bzw. einer Switch-Ressource durch einen bisher nicht berechtigten Benutzer umgehend bei allen berechtigten Benutzern der Nutzungsumfang in einem vorbestimmten Zeitraum der Vergangenheit erfaßt und in Abhängigkeit vom Erfassungsergebnis wie oben beschrieben vorgegangen. Ergibt sich, daß einer der bisher berechtigten Benutzer das lizenzierte Programm bzw. die lizenzierte Switch-Ressource nicht hinreichend genutzt hat und insbesondere auch die weitere Nutzung nicht geltend macht, wird die Berechtigung dem aktuell interessierten Benutzer zugewiesen.

Der wartende Benutzer kann aus einer dem lizenzierten Programm bzw. der lizenzierten Switch-Ressource zugeordneten Warteschlange ausgewählt werden. Bei Aufruf eines lizenzierten Programms bzw. einer lizenzierten Switch-Ressource wird hierbei ein Benutzerkonto in der Warteschlange gespeichert, wenn dem Benutzer bisher keine Lizenz zugewiesen ist. Vorzugsweise ist jedem lizenzierten Programm bzw. jeder lizenzierten Switch-Ressource eine Warteschlange zugeordnet. Die Warteschlangen können von einem speziellen Programm verwaltet werden, das beispielsweise als Systemprozess eines Betriebssystems läuft. Vorteilhafterweise sollten auf die Warteschlange im wesentlichen alle Benutzer zumindest einen Lese-Zugriff haben; ein Schreib-Zugriff auf zumindest die eigenen Einträge ermöglicht es Benutzern, diese aus der Warteschlange wieder zu entfernen, wenn die Lizenz für einen Benutzer nicht mehr von Interesse ist.

Schließlich kann nach Empfang der Freigabe-Meldung die (intern) freigegebene Lizenz gespeichert und an einen das Programm bzw. die Switch-Ressource später aufrufenden Benutzer vergeben werden.

Eine gleichzeitige Überwachung von Programm-Lizenzen und Switch-Lizenzen wird erfindungsgemäß durch eine im Rechnernetz angeordnete Zentraleinheit realisiert, in der sowohl Informationen über die zu Verfügung stehenden Programm-Lizenzen als auch die zu Verfügung stehenden Switch-Lizenzen gespeichert sind. Hierbei erfolgt eine Zuteilung einer Programm-Lizenz an einen Benutzer bzw. eine Applikation direkt zwischen dem entsprechenden Computer und der Zentraleinheit. Bei dem Zugriff des Benutzers bzw. der Applikation auf eine Switch-Ressource wird dies durch eine die Anbindung des Kommunikationssystems an das Rechnernetz realisierende Einrichtung erkannt und eine entsprechende Anfrage an die Zentraleinheit übermittelt. Eine Zuteilung einer Switch-Lizenz an einen Benutzer bzw. eine Applikation erfolgt somit indirekt zwischen der die Anbindung des Kommunikationssystems an das Rechnernetz realisierende Einrichtung und der Zentraleinheit.

Eine erfindungsgemäße Auswertungs- und Steuereinrichtung für Lizenzen weist einen geeignet einstellbaren Zeitgeber (jeweils in Zuordnung zu einem Benutzerkonto), ein Überwachungsprogramm zur Ermittlung einer Nutzung mindestens einer einem Benutzerkonto zugeordneten Lizenz innerhalb eines vorgebbaren Zeitraums, der dem Benutzerkonto zugeordnet ist und ein Meldeprogramm zum Erzeugen und Senden einer Meldung über die ermittelte Nutzung an das Benutzerkonto auf.

Die erfindungsgemäße Auswertungs- und Steuereinrichtung für Lizenzen ist vorzugsweise in der Zentraleinheit implementiert.

Das Meldeprogramm kann beispielsweise ein Plugin für ein im System vorhandenes E-Mail-System sein. Für die Nachrichten wird bevorzugt eine Benutzeroberfläche eingesetzt, welche dem benachrichtigten Benutzer eine einfache, kodierte Rückmeldung über seinen künftigen Bedarf an dem ihm zugewiesenen Programm vorschreibt (beispielsweise den einfachen Eintrag des Zeichens "+" oder der Ziffer "1" bei weiterhin bestehendem Bedarf oder des Zeichens "-" oder der Ziffer "0", falls kein Bedarf mehr besteht, in ein vorgegebenes Antwortfeld der ursprünglichen Nachricht). Das Meldeprogramm kann alternativ auch derart ausgestaltet sein, daß die Nachrichten an einem Display eines Telekommunikationsendgeräts ausgegeben werden, wobei eine Rückmeldung durch einen entsprechenden Tastendruck an dem Telekommunikationsendgerät bewirkt wird.

In einer bevorzugten Ausführungsform der Überwachungs- und Zuteilvorrichtung besitzt diese ferner Verwaltungsfunktionalität und weist hierzu ein Verwaltungsprogramm zum Verwalten und Verteilen von Lizenzen auf.

Vorzugsweise sind das Überwachungsprogramm, das Meldeprogramm und/oder das Verwaltungsprogramm integraler Bestandteil eines Programmpakets zur Überwachung, Freigabe und Zuteilung von Lizenzen, das zum Einsatz mit herkömmlichen Computer-Betriebssystemen, wie beispielsweise den Betriebssystemen der Windows-Familie der Firma Microsoft, Betriebssystemen der Firma Apple Computer, UNIX oder dergleichen weitverbreiteten Betriebssystemen, ausgebildet ist.

Ein derartiges Programmpaket kann als Softwareprodukt insbesondere unabhängig von den Herstellern der lizenzierten Programme bzw. der Anbieter der Switch-Ressourcen sowie der genannten oder ähnlicher Betriebssysteme angeboten und eingesetzt werden. Es ist dann allerdings sicherzustellen, dass für das Entziehen und Freigeben von Lizenzen geeignete Schnittstellen vorhanden sind, auf die das Programmpaket Zugriff hat. Diese Schnittstellen können durch das Betriebssystem spezifiziert sein. Vorzugsweise sollten sie standardisiert sein. Andernfalls muss das Programmpaket zum Verarbeiten proprietärer Lizenz-Schnittstellen entsprechend vorbereitet sein. Hierfür könnte für jeden Programmhersteller eine Art Modul oder Plugin für das Programmpaket bereit gestellt werden, so dass in Abhängigkeit der in dem System eingesetzten Programme entsprechende Module oder Plugins in das Programmpaket geladen (implementiert) werden können.

Nachfolgend werden weitere Aspekte und Vorteile der Erfindung anhand eines konkreten Ausführungsbeispiels unter Bezugnahme auf die Figur beschrieben.

Dabei zeigt:

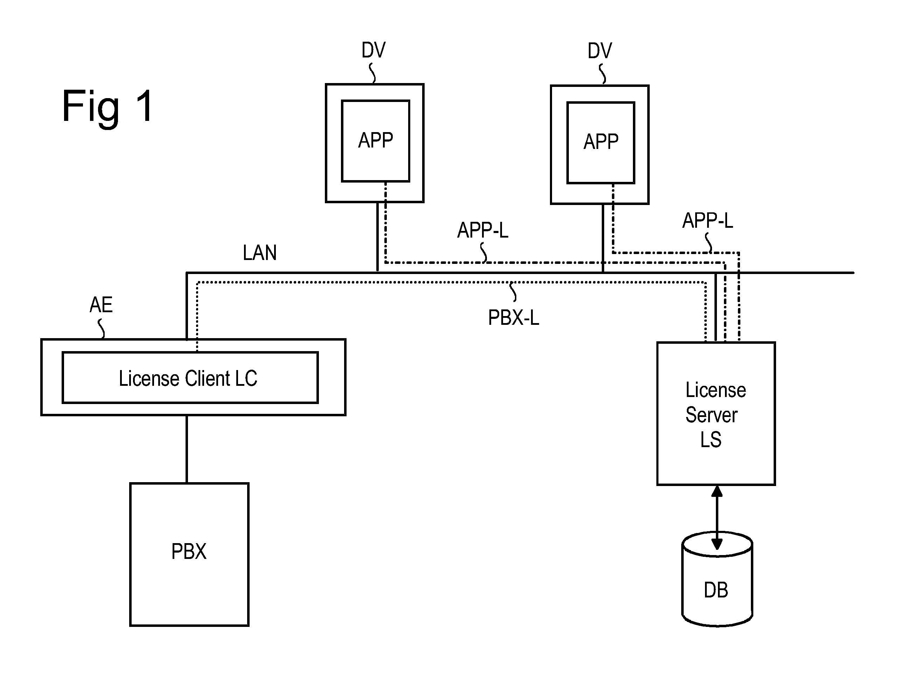

- Fig. 1:: ein Strukturbild zur schematischen Darstellung der wesentlichen Funktionseinheiten der erfindungsgemäßen Anordnung zur Verwaltung von Lizenzen.

Im vorliegenden Ausführungsbeispiel ist eine Kommunikationsanlage PBX über eine - in der Regel durch eine Datenverarbeitungseinrichtung DV realisierte - Anschlußeinheit AE mit einem lokalen Netzwerk LAN verbunden. Eine Datenübermittlung zwischen der Kommunikationsanlage PBX und der Anschlußeinheit AE erfolgt dabei beispielsweise gemäß dem CSTA-Standard.

An das lokale Netzwerk LAN sind weitere Datenverarbeitungseinrichtungen DV - beispielsweise PCs - und eine Zentraleinheit LS angeschlossen. Durch die Zentraleinheit LS - auch als "License Server" bezeichnet - erfolgt eine Verwaltung der zur Verfügung stehenden Programm- und Switch-Lizenzen des Systems. Des weiteren erfolgt durch die Zentraleinheit LS eine Verwaltung einer Vielzahl von Anwendungsprogrammen - im weiteren als Applikationen APP bezeichnet -, die über die Datenverarbeitungseinrichtungen DV aufgerufen und genutzt werden können. Informationen über die Lizenzen und die Applikationen APP und die Applikationen APP sind im vorliegenden Ausführungsbeispiel in einer der Zentraleinheit LS zugeordneten Datenbasis DB gespeichert. Alternativ können die Informationen und die Applikationen APP direkt in der Zentraleinheit LS gespeichert sein. Für einige Programme bzw. Switch-Ressourcen stehen nur eine geringere Anzahl von Lizenzen als die Anzahl der Benutzer zur Verfügung.

In Fällen, in denen durch einen Benutzer bzw. eine Applikation APP ein Zugriff APP-L auf Programm-Lizenzen erfolgt, wird eine Zuteilung einer Programm-Lizenz an den Benutzer bzw. an die Applikation APP direkt zwischen der entsprechenden Datenverarbeitungseinrichtung DV und der Zentraleinheit LS vorgenommen. Bei dem Zugriff PBX-L eines Benutzers bzw. einer Applikation APP auf eine Switch-Ressource wird dies durch einen in der Anschlußeinheit AE implementierten "License Client" LC erkannt und durch diesen eine entsprechende Anfrage an die Zentraleinheit LS übermittelt. Eine Zuteilung einer Switch-Lizenz an einen Benutzer bzw. eine Applikation APP erfolgt somit indirekt zwischen dem in der Anschlußeinheit AE implementierten "License Client" LC und der Zentraleinheit LS.

Die Anzahl der Benutzer muss nicht notwendigerweise gleich der Anzahl der Datenverarbeitungseinrichtungen DV im lokalen Netzwerk LAN sein. Sie kann geringer oder auch größer sein. Jedem Benutzer ist ein Benutzerkonto, konkret ein Account mit einer benutzerspezifischen Arbeitsumgebung zugeordnet (wie beispielsweise bei den Betriebssystemen UNIX, Windows-NT und -2000). Das bedeutet im wesentlichen, dass sich ein Benutzer an einer beliebigen Datenverarbeitungseinrichtung DV in das lokale Netzwerk LAN einbuchen kann und dort seine gewohnte Arbeitsumgebung vorfindet.

Jedem Benutzer ist eine bestimmte Anzahl von Lizenzen zugeordnet, also beispielsweise der Sekretärin in einer Firma eine Programmlizenz für eine Textverarbeitung, eine Kontaktdatenbank und eine Tabellenkalkulation. Einem Konstrukteur in der Firma ist dagegen eine Programmlizenz auf ein (teures) CAD-Programm für die Konstruktion und für eine Textverarbeitung zugeordnet.

Grundsätzlich werden die Lizenzen von einem Administrator des lokalen Netzwerks LAN verwaltet. Dieser vergibt unter anderem Lizenzen an Benutzer, genauer deren Benutzerkonten. Bisher ist diesem Administrator auch die Aufgabe des manuellen Managements der Lizenzen zugefallen. Auch der Administrator besitzt ein Benutzerkonto, das auch als Administratorkonto bezeichnet wird.

Um die Arbeit des Administrators zu erleichtern, ihn sogar nahezu vollständig von den zeitaufwendigen Verwalten der Lizenzen zu entlasten, wird in der Zentraleinheit LS des lokalen Netzwerks LAN ein - nicht dargestelltes - Programmpaket zur Überwachung, Freigabe und Zuteilung von Lizenzen eingesetzt, welches das erfindungsgemäße Verfahren einsetzt. Das Programmpaket umfasst mehrere Programmmodule:
- ein Überwachungsprogramm zum Ermitteln einer Nutzung mindestens einer mindestens einem Benutzerkonto zugeordneten Lizenz innerhalb eines vorgebbaren Zeitraums, der dem mindestens einem Benutzerkonto zugeordnet ist,
- ein Meldeprogramm zum Erzeugen und Senden einer Meldung über die ermittelte Nutzung an das mindestens eine Benutzerkonto, und
- ein Verwaltungsprogramm zum Verwalten und Verteilen von Lizenzen.

Es verwaltet zudem geeignete Zeitsteuereinrichtungen für die Überwachungsvorgänge, speziell den einzelnen Benutzerkonten zugeordnete Zeitgeber, welche beispielsweise mit der Zuweisung einer Lizenz an den jeweiligen Benutzer gestartet werden.

Der Überwachungsvorgang der Nutzung einer Lizenz, die einem Benutzerkonto zugeordnet ist, wird nun im folgenden genauer erläutert:

Das Überwachungsprogramm startet eine Routine, welche die Anzahl der Aufrufe des der Lizenz zugeordneten Programms bzw. der Switch-Ressource von dem Benutzerkonto zählt und die jeweilige Nutzungszeit misst und protokolliert. Die ermittelten Daten werden gespeichert und nach Ablauf des Überwachungs-Zeitraums vom Überwachungsprogramm automatisch ausgewertet. Hierzu addiert das Überwachungsprogramm die Nutzungszeiten, um die kumulierte Nutzungszeit des Programms bzw. der Switch-Ressource durch den Benutzer zu errechnen. Ferner wird die ermittelte Anzahl der Aufrufe eingerechnet, so dass nicht ein einmaliger Aufruf mit langer Nutzungszeit das Ergebnis verzerrt.

Anschließend wird überprüft, ob die ermittelte Nutzung - genauer die Nutzungszeit - unter einen vorbestimmbaren Wert liegt. Beispielsweise kann der Wert eine wenigstens einmalige Nutzung im Überwachungs-Zeitraum für mindestens eine Stunde festlegen. Unterschreitet die ermittelte Nutzung diesen Wert, wird von dem Meldeprogramm eine Routine aufgerufen, die automatisch eine bereits vorbereitete E-Mail, welche die ermittelte Nutzung enthält, an das Benutzerkonto sendet. Das Absenden der E-Mail startet gleichzeitig eine Zeitmessroutine.

Die Zeitmessroutine misst den Zeitablauf vom Absenden der E-Mail an. Bei Erreichen eines bestimmten Zeitwertes, beispielsweise einer Woche ab Absenden der E-Mail, wird von dem Meldeprogramm dem Verwaltungsprogramm signalisiert, dass die Lizenz freigegeben werden kann. Das Verwaltungsprogramm gibt dann die Lizenz wieder frei, indem sie dem Benutzerkonto die Lizenz entzieht. Der Benutzer ist damit von der weiteren Nutzung des Programms bzw. der Switch-Ressource erst einmal ausgeschlossen. Nach der Freigabe wird automatisch eine E-Mail an das Administratorkonto gesendet, damit der Administrator über die frei verfügbare Lizenz informiert ist und beispielsweise überflüssige, also wenig oder gar nicht genutzte Lizenzen identifizieren kann.

Sollte der Benutzer allerdings auf die E-Mail des Meldeprogramms antworten, bevor der Zeitwert von der Zeitmessroutine erreicht wird, wird die Zeitmessung automatisch gestoppt. Sodann kann die Antwort des Benutzers automatisch ausgewertet werden. Eine derartige Auswertung wird durch standardisierte E-Mails als Meldung durch das Meldeprogramm als auch Rückmeldung durch den Benutzer erleichtert. Beispielsweise kann die E-Mail an den Benutzer in Form eines Formulars ausgebildet sein, so dass der Benutzer als Rückmeldung lediglich eine Option im Formular "ankreuzen" muss. Denkbar wäre hier, dass folgende Optionen in der E-Mail an das Benutzerkonto vorgegeben sind: a) weitere Benutzung der Programmlizenz gewünscht oder b) keine weitere Nutzung gewünscht.

Die Rückmeldung kann im Einzelfall auch automatisch vorgenommen werden. Hierzu nutzt der Benutzer lediglich in seinem E-Mail-Programm eine speziell vorgesehene Option, die eine automatische Rückmeldung ermöglicht. Diese Option kann in herkömmliche E-Mail-Programme per Plugin implementiert werden. Mittels dieser Option kann der Benutzer beispielsweise festlegen, dass jede Meldung über eine zu geringe Nutzung derart beantwortet wird, dass die weitere Nutzung der Lizenz durch den Benutzer gewährleistet ist. Ein solcher Fall kann insbesondere dann auftreten, wenn der Benutzer im Urlaub ist oder allgemein das Programm bzw. die Switch-Ressource für einen längeren Zeitraum nicht nutzt. Eine Freigabe der ihm zugeordneten Lizenz wäre jedoch hier mit einem erheblichen Nachteil für den Benutzer verbunden, der vermieden werden soll.

Alternativ oder zusätzlich kann der Benutzer festlegen, dass für bestimmte Lizenzen auf die Nutzungsinformation hin eine automatische Rückmeldung erfolgt, die eine Freigabe bewirkt. Dies kann beispielsweise sehr vorteilhaft bei neuen Programmen bzw. Switch-Ressourcen angewendet werden. Hier kann der Benutzer zunächst eine Lizenz reservieren, um das neue Programm bzw. die neue Switch-Ressource testen zu können. Sollte er kein weiteres Interesse an der Nutzung haben, kann er durch die vorgenannte Option bestimmen, dass die Lizenz freigegeben werden soll. Selbstverständlich sollte in einem derartigen Anwendungsfall der vorbestimmbare Schwellwert des Nutzungsumfanges sehr hoch eingestellt werden, um die Absendung einer automatischen Meldung nach Ablauf des Überwachungs-Zeitraums zu gewährleisten. Es kann nämlich davon ausgegangen werden, dass das neue Programm bzw. die neue Switch-Ressource während des ersten Überwachungs-Zeitraums intensiv genutzt werden wird, und normalerweise keine Meldung generiert werden würde.

Schließlich sei noch erwähnt, dass nach Ablauf eines Überwachungs-Zeitraums sich weitere Überwachungs-Zeiträume entweder "nahtlos" oder mit einem gewissen Zeitabstand, vorzugsweise durch den vorgebbaren Zeitwert bestimmt, anschließen können. Vorzugsweise beginnt ein neuer Überwachungs-Zeitraum dann, wenn keine Meldung versandt wurde (da die Nutzung einer Programmlizenz durch einen Benutzer ausreichend ist) oder der Benutzer trotz geringer Nutzung eine Lizenz weiter behalten möchte.

Die Überwachung, Meldungserzeugung und Verwaltung von Lizenzen wird vorzugsweise fortwährend im Hintergrund, beispielsweise als "unsichtbarer" Betriebssystem-Prozess, in dem lokalen Netzwerk LAN ausgeführt. Damit können eine kostengünstige Verwaltung und Steuerung der Verteilung von Lizenzen erzielt werden.

## Patentansprüche

1. Computergestütztes Verfahren zur Überwachung einer Nutzung von Lizenzen in einem Rechner- und/oder Kommunikationssystem mit einer Mehrzahl von Endgeräten, in dem mindestens eine Lizenz mindestens einem Benutzer zugeordnet ist, wobei die Nutzung der Lizenz oder Lizenzen durch den oder jeden Benutzer während eines definierten Zeitraumes nach Laufzeitbeginn der Lizenz erfaßt wird,
**dadurch gekennzeichnet, daß**
in Abhängigkeit von dem Erfassungsergebnis mindestens dann eine in Abhängigkeit von dem Erfassungsergebnis generierte Nachricht an das Endgerät des Benutzers gesendet wird, falls der Nutzungsumfang einen vorbestimmbaren Wert unterschreitet.

2. Verfahren nach Anspruch 1,
**dadurch gekennzeichnet, daß**
die Nachricht dann abgesendet wird, wenn der Benutzer die Lizenz in dem definierten Zeitraum nicht benutzt hat.

3. Verfahren nach Anspruch 1 oder 2,
**dadurch gekennzeichnet, daß**
der definierte Zeitraum einige Monate, insbesondere drei, sechs oder zwölf Monate, beträgt.

4. Verfahren nach einem der vorangehenden Ansprüche,
**dadurch gekennzeichnet, daß**
die Nachricht als E-Mail, an das Endgerät des Benutzers gesendet wird.

5. Verfahren nach einem der vorangehenden Ansprüche,
**dadurch gekennzeichnet, daß**
nach Absenden der Nachricht eine Zeitmessung gestartet und bei Ablauf eines vorgegebenen Antwort-Zeitraumes die überwachte Lizenz dem Benutzer intern entzogen und für andere Benutzer im System freigegeben wird.

6. Verfahren nach Anspruch 5,
**dadurch gekennzeichnet, daß**
eine als Rückmeldung spezifizierte Nachricht, insbesondere in Form einer E-Mail, vom Endgerät des benachrichtigten Benutzers die Zeitmessung stoppt.

7. Verfahren nach einem der vorangehenden Ansprüche,
**dadurch gekennzeichnet, daß**
die Nachricht an den Benutzer einen Benutzerführungs-Hinweis auf eine formalisierte Rückmeldung aufweist, welche eine automatische Auswertung der Rückmeldung und in Abhängigkeit hiervon eine automatische Entscheidung über ein internes Entziehen der Lizenz gegenüber dem benachrichtigen Benutzer und ein anschließendes Freigeben für andere Benutzer erlaubt.

8. Verfahren nach einem der Ansprüche 5 bis 7,
**dadurch gekennzeichnet, daß**
nach internem Entzug und anschließender Freigabe automatisch eine Freigabe-Meldung an eine Administrationseinrichtung des Systems gesendet wird.

9. Verfahren nach Anspruch 8,
**dadurch gekennzeichnet, daß**
nach Empfangen der Freigabe-Meldung die freigegebene Lizenz automatisch einem Benutzer zugewiesen wird, der über sein Endgerät eine Bedarfs-Nachricht an die Administrationseinrichtung gesendet hat.

10. Verfahren nach Anspruch 9,
**dadurch gekennzeichnet, daß**
die Erfassung der Nutzung der Lizenz im Ansprechen auf den Eingang einer Bedarfs-Nachricht durch einen bisher nicht berechtigten Benutzer bei der Administrationseinrichtung gestartet wird.

11. Verfahren nach einem der Ansprüche 5 bis 10,
**dadurch gekennzeichnet, daß**
eine Freigabe-Kennzeichnung der freigegebenen Lizenz im System zentral gespeichert und an ein Endgerät eines Benutzers vergeben wird, dem die Lizenz vorher nicht zugeordnet war.

12. Verfahren nach einem der vorangehenden Ansprüche,
**dadurch gekennzeichnet, daß**
permanent die Nutzung einer Mehrzahl von Lizenzen parallel überwacht und diese wahlweise neu vergeben oder zur Vergabe bereitgestellt werden.

13. Verfahren nach einem der vorangehenden Ansprüche,
**dadurch gekennzeichnet, daß**
die Lizenz eine Programm-Lizenz und/oder eine Switch-Lizenz ist.

14. Anordnung zur Überwachung einer Nutzung von Lizenzen in einem Rechner- und/oder Kommunikationssystem,
mit einer Zentraleinheit (LS) zur gleichzeitigen Verwaltung von in dem Rechner- und/oder Kommunikationssystem zur Verfügung stehenden Programm- und Switch-Ressourcen.

15. Anordnung nach Anspruch 14,
**gekennzeichnet durch**
eine das Kommunikationssystem (PBX) mit dem Rechnersystem (LAN) verbindende Anschlußeinheit (AE) zur Registrierung von angeforderten Switch-Ressourcen an die Zentraleinheit (LS).

16. Auswertungs- und Steuereinrichtung zum Verwalten von Lizenzen in einem Rechner- und/oder Kommunikationssystem, die zur Ausführung des Verfahrens nach einem der vorangehenden Ansprüche ausgebildet ist,
**gekennzeichnet durch**
- einen, insbesondere einstellbaren, jeweils einem Benutzer der Lizenz zugeordneten Zeitgeber, der mit dem Laufzeitbeginn und/oder dem Endzeitpunkt einer Benutzung der Lizenz gestartet wird,
- ein Überwachungsprogramm zur nutzerbezogenen Ermittlung von Nutzungen der Lizenz innerhalb des vorgegebenen Zeitraums und
- ein Meldeprogramm zur Erzeugung einer Nachricht über die ermittelte Nutzung bei Ablauf des Zeitgebers und deren Absendung an das Endgerät des Benutzers.

17. Auswertungs- und Steuereinrichtung nach Anspruch 16,
**gekennzeichnet durch**
eine Benutzeroberfläche, welche dem eine Nachricht empfangenden Benutzer eine formalisierte Antwort auf die Nachricht vorgibt.

18. Auswertungs- und Steuereinrichtung nach Anspruch 16 oder 17,
**gekennzeichnet durch**
ein Verwaltungsprogramm zur Verwaltung von als nicht benutzt erfaßten Lizenzen.

19. Softwareprodukt zur Durchführung des Verfahrens nach einem der Ansprüche 1 bis 13, mit einem ein integrales Programm bildenden Überwachungs-, Melde- und wahlweise Verwaltungsprogramm, welches zum Einsatz mit einem Standard-Betriebssystem ausgebildet ist.
